# EUROPÄISCHE PATENTANMELDUNG

(11) **EP 0 974 818 A1**
(43) Veröffentlichungstag der Anmeldung: **26.01.2000**
(21) Anmeldenummer: 98105496.8
(22) Anmeldetag: 17.07.1998
(51) Int. Cl.: G01F 23/40, H04M 11/00

(54) **Heizölstandssensor mit Messdatenkommunikationssystem**

(71) Anmelder: Terra Nostra Anstalt, 9495 Triesen (LI)
(72) Erfinder: Wahr, Thomas, 72336 Balingen (DE)
(74) Vertreter: Huber, Wilfried

(57) **Zusammenfassung**

Meßapparatur in Form einer Tanksonde zur Messung des Flüssigkeitsinhaltes in Tanks mit jeglicher Tankform mit der Möglichkeit die gemessenen Daten entweder direkt auf der Anzeige des Gerätes abzulesen oder per Datenkommunikation von jedem beliebigen Ort per Telefon abzurufen.

## Beschreibung

### Einleitung

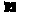 OILCOM" wurde zur Messung von Heizölständen in dafür geeigneten Tanks entwickelt. Die gemessenen Daten können in der Standardausführung direkt an einer Anzeige abgelesen, oder in der Profiausführung per Datenkommunikation von jedem beliebigen Ort per Telefon abgerufen werden.

### Funktionalität

Die wird über ein Rad (D = 67 mm), an dem ein Schwimmer hängt und einem Rad (D = 8 mm) mit Gegengewicht positioniert. Die verwendeten Materialien sind resistent gegen Korrosion und Zersetzung durch Flüssigkeiten wie Heizöl, etc.

Der Meßwert wird in eine Tonfrequenz zwischen 2 und 3 Kilohertz umgewandelt, wobei 2 kHz mit 0 % und 3 kHz mit 100 % gleichzusetzen sind.

Diese Frequenz kann als Analog-Signal entweder über TAE-Dose im analogen Netz oder über einen a/b-Wandler im digitalen Netz abgefragt werden. Hierfür wird ein Programm, das die Tonfrequenz in Tankstände per Liter umrechnet, angewandt.

### Konstruktion

Das System ist auf einer 3 mm starken Grundplatte (123/123 mm) aufgebaut. Spindelpotentiometer und Umlenkräder sind an einem senkrecht stehenden, 3 mm starken Trägersteg befestigt. Die Platine zur Auswertung der Daten (40/90 mm) ist ebenfalls an diesem Steg angebracht.

Von der Platine führt die Telefonleitung zum nächstliegenden Telefonanschluß.

An der Unterseite der Trägerplatte ist ein Moosgummi, zur Abdichtung zwischen Platte und Tank befestigt.

Die Verbindung zwischen Tank und Meßsonde wird durch ein Blechrohr (3 mm) mit einem Durchmesser von 50 mm und einer Höhe von 20 mm hergestellt. Zur Abdeckung dient eine Haube mit der Größe von 125/125/130 mm aus 1 mm starkem Blech.

Die tragenden Teile sowie die Haube sind pulverbeschichtet.

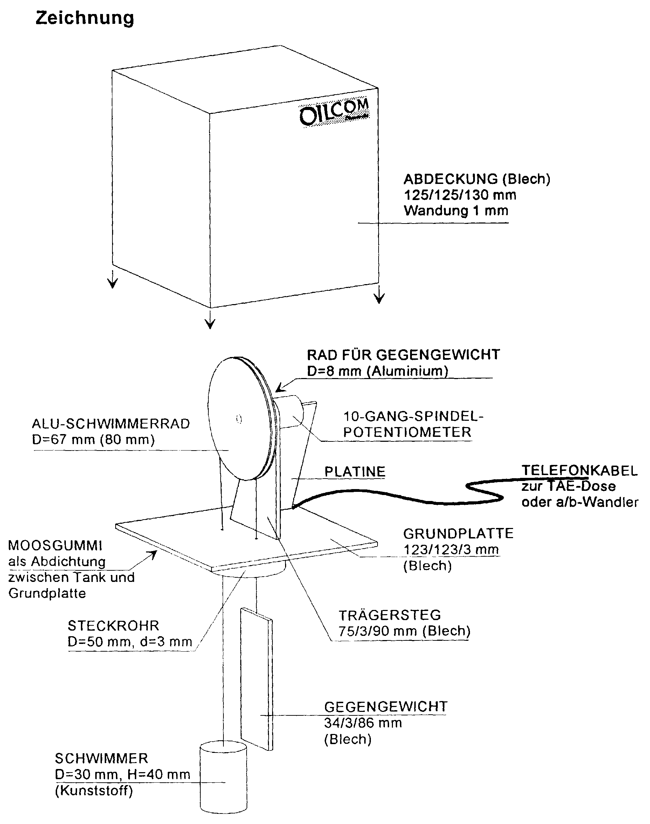

## Patentansprüche

1. Das Neue an der Meßsonde ***OILCOM*** ist die Kombination zwischen Meßeinrichtung, Wandlung des Meßwertes in eine Tonfrequenz und die Übertragung per Telekommunikation. Da nur ein Wert zwischen 0 und 100 % übertragen wird und keine Berechnung in der Sonde erfolgt (kein Rechner), sind Herstellungskosten und Energieverbrauch sehr niedrig gehalten.
Die Hauptentwicklung liegt auf der Wandlerplatine, die diese Vorgehensweise möglich macht.
